# EUROPÄISCHE PATENTANMELDUNG

(11) **EP 1 151 928 A2**
(43) Veröffentlichungstag der Anmeldung: **07.11.2001**
(21) Anmeldenummer: 01110381.9
(22) Anmeldetag: 26.04.2001
(51) Int. Cl.: B65D 25/42

(54) **Kunststoffbehältnis mit Stutzen sowie Vorrichtung und Verfahren zur Einbettung des Stutzens im Rotationsformprozess**

(30) Priorität: 02.05.2000 DE 10021307
(71) Anmelder: KÖVER GMBH & CO. KG Metall- und Kunststoffverarbeitung, D-21614 Buxtehude (DE)
(72) Erfinder: Stechmann, Ralf, 21641 Apensen (DE); Hübenthal, Dieter, 21614 Buxtehude (DE); Hahlbeck, Karlheinz, 27404 Zeven (DE)
(74) Vertreter: Einsel, Martin, Dipl.-Phys.

(57) **Zusammenfassung**

Die Erfindung betrifft ein Kunststoffbehältnis (10) mit Stutzen (13), wobei der Stutzen (13) in der Wand (11) des Behältnisses (10) in einer Durchgangsöffnung (18) fest verankert ist und eine innere axiale Durchgangsöffnung (14) aufweist, wobei der Stutzen (13) integraler Bestandteil des rotationsgeformten Behältnisses (10) ist, eine axiale Erstreckung mit einem bezüglich der Wand (11) des Behältnisses (10) äußeren und inneren Abschnitt (15, 16) und eine Verbindungsnaht (17) die ringförmige Mantelfläche (19) des Stutzens (13) mit der Durchgangsöffnung (18) verbindet und eine Vorrichtung (22) und ein Verfahren zur Einbettung des Stutzens (13) im Rotationsformprozeß.

## Beschreibung

Die vorliegende Erfindung betrifft ein Kunststoffbehältnis mit Stutzen, wobei der Stutzen in der Wand des Behältnisses in einer Durchgangsöffnung fest verankert ist und eine innere axiale Durchgangsöffnung aufweist sowie eine Vorrichtung und ein Verfahren zur Einbettung des Stutzens im Rotationsformprozeß.

Aus dem Prospekt der Gebr. Holder GmbH, 72555 Metzingen, DE, mit dem Titel "Pflanzenschutzgeräte für den Wein- und Obstbau" und dem Druckhinweis 138503 sowie 9848 ist ein Pflanzenschutzgerät mit einem Kunststoffbehältnis für flüssiges Planzenschutzmittel bekannt. Das Kunststoffbehältnis ist im Rotationsformprozeß gefertigt und weist eine axiale Durchtunnelung in Form eines Rohres auf. Die Durchtunnelung dient der Aufnahme einer Antriebswelle des als Anhänger ausgebildeten Pflanzenschutzgerätes. Hierdurch ist es möglich, das als Tank dienende Kunststoffbehältnis mit geringer Bauhöhe möglichst großvolumig auszugestalten, da es sich bis unter die Antriebswelle erstrecken kann. Wenngleich das Behältnis und auch die Durchgangsöffnungen für die Durchtunnelung im Rotationsformprozeß erzeugt werden, so ist eine Einbringung des Rohres zur Durchtunnelung in einem besonderen Arbeitsschritt nachträglich, z.B. durch Einpressen oder dergleichen, durchzuführen und ferner eine gesonderte Verbindung und Abdichtung in den Durchgangsöffnungen vorzunehmen.

Mögliche Verbindungsarten sind z. B. Spiegelschweißen oder Warmgasschweißen oder auch einfach Verklebungen. D. h., es sind zwei getrennte Teile, die jeder für sich zunächst hergestellt werden, in einem weiteren Herstellungsverfahren miteinander aufwendig zu verbinden, wobei im Fall von Verklebungen kaum eine dauerhafte Verbindung erzeugt werden kann. Die so gestalteten Verbindungen sind somit äußerst aufwendig in ihrer Herstellung und bei langem Gebrauch hinsichtlich Gasund Flüssigkeitsdichtigkeit nicht sicher und bedürfen insofern einer ständigen Kontrolle an den entsprechenden Nahtstellen.

Im Bereich des Kleinbehälterbaus, etwa für Scheibenwaschwasser oder Bremsflüssigkeit für Kraftfahrzeuge, werden Halbschalen im Spritzguß- oder sogar im Rotationsformverfahren gefertigt, die in ihrer Form Hälften von Anschlußstutzen enthalten und durch hohen Druck miteinander verschweißt werden. Wenngleich mit diesem Herstellungsverfahren sozusagen in einem Zug Behälter und Stutzen entstehen, so versagt dieses Verfahren bei groß dimensionierten Behältnissen.

Die im Stand der Technik bekannten Behältnisse mit Stutzen, Vorrichtungen zu deren Herstellung und Verfahren aus und für Rotationsformprozesse sind daher und wegen der nicht herstellbaren exakten Innen- und Außendurchmesser der Stutzen nicht geeignet die der vorliegenden Erfindung zugrunde liegende Aufgabe befriedigend zu lösen.

Aufgabe der vorliegenden Erfindung ist es, ein Behältnis mit Stutzen aus einem Rotationsformprozeß und eine Vorrichtung und ein Verfahren zur Einbettung eines Stutzens in ein Kunststoffbehältnis im Rotationsformprozeß zu schaffen, wobei das Behältnis äußerst einfach und robust ist und für eine lange Benutzung eine sichere Einbettung von handelsüblichen Stutzen mit vorgegebenen inneren und äußeren Abmessung aufweist, die Vorrichtung als passives Element die Form ergänzt, einen einfachen Aufbau hat und eine gezielte dichtende Verbindung von Behältnis und Stutzen gewährleistet, und das Verfahren keine dem normalen Herstellungsprozeß störende Verfahrensschritte fordert.

Die eingangs genannte Aufgabe wird hinsichtlich des Kunststoffbehältnisses mit Stutzen erfindungsgemäß dadurch gelöst, dass der Stutzen integraler Bestandteil des rotationsgeformten Behältnisses ist, eine axiale Erstreckung mit einem bezüglich der Wand des Behältnisses äußeren und inneren Abschnitt und eine umlaufende Verbindungsnaht die ringförmige Mantelfläche des Stutzens mit der Durchgangsöffnung verbindet.

Überraschenderweise hat sich gezeigt, daß präzise innere und äußere Abmessungen eines Stutzens in einem Behältnis, z. B. zum Befüllen und Entleeren, auf einfache Weise durch die Verwendung von handelsüblichen Stutzen als Halbfabrikate und deren Verbindung mit der Wandung oder Wand des Behältnisses während des Formprozesses erreicht werden können, wobei gleichzeitig ein quasi einstückiger Gegenstand aus Behältnis und Stutzen entsteht, dessen Verbindung äußerst langlebig ist.

Vorteilhaft ist vorgesehen, daß die Verbindungsnaht in einem Spalt zwischen dem Stutzen und der Durchgangsöffnung des Behältnisses gebildet ist. Hierdurch ist eine äußerst dauerhafte und feste Verbindung der beiden Teile gewährleistet, wobei gleichzeitig äußerst saubere Konturen des äußeren Abschnittes des Stutzens verbleiben und damit exakte Anschlußmaße zur Verfügung stehen.

Anmeldungsgemäß ist ferner vorgesehen, daß die Verbindungsnaht im Querschnitt Linsenform hat und aus einem Gemisch des Materials des Behältnisses und des Stutzens besteht. Hierdurch ist eine äußerst robuste und hinsichtlich etwaiger Flüssigkeiten und Gase dichte Verbindung gewährleistet.

Vorteilhaft ist ferner vorgesehen, daß der Stutzen aus High Density Polyethylen (HDPE) und das Behältnis aus Linear Low Density Polyethylen (LLDPE) ist. Durch diese Materialwahl können einerseits handelsübliche Halbfabrikate zum Einsatz gelangen, die aus HDPE aufgebaut sind und in der Regel für Gas- und Flüssigkeitsleitungen, wie Wasserleitungen eingesetzt werden.

Ferner ist anmeldungsgemäß vorgesehen, daß die Längserstreckung des Stutzens parallel zur Ausformrichtung und orthogonal zu einer ebenen Querschnittsfläche eines Flanschabschnittes steht, der die Durchgangsöffnung des Behältnisses aufnimmt. Hierdurch ist ein einfaches Ausformen des im Rotationsformprozeß entstehenden Behältnisses zusammen mit dem Stutzen möglich und gleichzeitig, aufgrund des seitlich freiliegenden Flanschenabschnittes, genügend Platz für Anschlußelemente im Bereich des äußeren Stutzens vorhanden.

Vorteilhaft ist ferner vorgesehen, daß die Querschnitte des Stutzens und der Durchgangsöffnung einen ringförmigem Spalt bildend aneinander angepaßt, kreisrund oder beliebig sind. Hierdurch sind einerseits eine sichere, feste und dichte Verbindungsnaht gewährleistet und ferner eine Vielzahl von Stutzenkombinationen von parallelen Stutzen oder dergleichen mit einem Flanschabschnitt möglich.

Vorteilhaft ist ferner vorgesehen, daß die Verbindungsnaht den Stutzen und das Behältnis gas- und wasserdicht zu einem einzigen Teil miteinander verbindet. Dies hat nicht nur Vorteile hinsichtlich der zu erwartenden langen Lebensdauer, Robustheit und Dichtheit, sondern auch Vorteile hinsichtlich des Transportes, der Lagerhaltung etc., da der Stutzen integraler Bestandteil des Behältnisses ist und somit auch nicht verloren gehen kann oder unabhängig davon bevorratet werden muß.

Die eingangs genannte Aufgabe wird hinsichtlich der Vorrichtung zur Einbettung eines Stutzens in ein Kunststoffbehältnis im Rotationsformprozeß erfindungsgemäß dadurch gelöst, daß eine Haltevorrichtung den Stutzen auf der äußeren Oberfläche der Form des Behältnisses in einer Durchgangsöffnung der Form positioniert, die Haltevorrichtung einen Halter umfaßt, der einen äußeren Teil des Stutzens umschließt und fest in einer Durchgangsöffnung einer ringförmigen Scheibe angeordnet ist, die ihrerseits kraft- oder formschlüssig in der Durchgangsöffnung der Form angeordnet ist.

Überraschenderweise hat sich gezeigt, daß eine Form für ein Kunststoffbehältnis eine erfindungsgemäße passive Vorrichtung aufweisen kann, die äußerst einfach aufgebaut ist und die Einbettung des Stutzens während des Rotationsformprozesses gewährleistet, wobei eine anmeldungsgemäße Scheibe, die sowohl bezüglich der Form und des Stutzens derart geschickt angeordnet ist, daß die erforderliche Wärmemenge für eine schweißähnliche Verbindung einer ringförmigen Stutzenoberfläche mit der Wand des Behältnisses zur Verfügung steht. Gleichzeitig sind die Stutzen im übrigen gegen Verformungen durch Wärmeeinfluß geschützt. Diese an den Rotationsformprozeß angepaßte Vorrichtung gewährleistet einen gezielten Wärmeeintrag im Bereich der Verbindungsnaht und ist ferner geeignet für Halbfertigfabrikate oder Halbfabrikate, also Stutzen, die in allen Normgrößen erhältlich und anmeldungsgemäß verwendbar sind, ohne ihre Maße einzubüßen.

Anmeldungsgemäß ist vorgesehen, daß die Durchgangsöffnung der Form einen von außen zugänglichen Flansch mit ebener Querschnittfläche hat. Hierdurch sind die Veränderungen der Form minimal und unterliegen ferner nur noch den Bedingungen des Entformens, wie weiter unten ausgeführt.

Vorteilhaft ist vorgesehen, daß die Scheibe zum Eingriff in den Flansch der Durchgangsöffnung der Form einen diesem angepaßten Flansch aufweist und auf ihrer gegenüberliegenden Seite einen eingefrästen Flansch zur Aufnahme des Halters hat. Hierdurch ist, wie weiter unten ausgeführt, eine geschickte erfindungsgemäße Wärmeeinleitung möglich, da allein die die Verbindungswärme transportierende Scheibe mit der Form in Berührung kommt und die Scheibe zum Halter isoliert ist. An dieser Stelle ist der Hinweis angebracht, daß zwischen Form und Scheibe, insbesondere wegen des aneinanderanstoßens der Materialien, die überdies noch unterschiedlich sind, ein für die Verbindung förderlicher Wärmewiderstand entsteht.

Vorteilhaft ist ferner vorgesehen, daß die äußeren Abmessungen des Stutzens und die inneren Abmessungen der Durchgangsöffnung der Scheibe in der Ebene der äußeren Querschnittsfläche der Durchgangsöffnung der Form einen schmalen Spalt bilden. Hierdurch wird auf einfachste Wiese unterschiedlichen Ausdehnungen der unterschiedlichen Materialien bei Erwärmung Rechnung getragen. Das Spaltmaß kann derart gewählt werden, daß keine Lochbildung und kein Verklemmen auftritt.

Vorteilhaft ist ferner vorgesehen, daß die inneren Abmessungen der Durchgangsöffnung der Scheibe zum Halter hin zunächst konstant sind und sich dann linear vergrößern und in dem den Halter aufnehmenden Flansch der Scheibe auslaufen. Hierdurch ist ein besonders geeigneter und zielgerichteter Wärmeeintrag in den Bereich der zu erzeugenden Verbindungsnaht auf einfachste Weise sichergestellt.

Anmeldungsgemäß ist ferner vorgesehen, daß der Halter hutförmig axial ausgebildet ist und einen inneren zur Scheibe weisenden Abschnitt hat, der eine innere Isolierung aufweist, die einen Abschnitt des Stutzens form- und/oder kraftschlüssig lösbar aufnimmt. Die an die Scheibe angrenzende Isolierung verhindert einerseits einen ungewollten Wärmeabfluß aus der Scheibe und verhindert sicher thermische Verformungen des Stutzens während des Rotationsformprozesses insbesondere in dessen äußerem Abschnitt.

Anmeldungsgemäß ist ferner vorgesehen, daß der Halter axial in Abstand zur Scheibe endet und die Isolierung in diesem Abschnitt den Halter ergänzt. Hierdurch ist konsequent jeglicher Wärmeabfluß, den die Scheibe durch Berührung auch mit dem inneren Abschnitt des Halters erleiden könnte, sicher und einfach unterbunden.

Vorteilhaft ist vorgesehen, daß die Isolierung aus einem festen Material mit geringer Wärmeleitfähigkeit, die Scheibe aus festem Material mit hoher Wärmeleitfähigkeit und der Halter aus festem Material mit mittleren Wärmeleitfähigkeit und die Form aus Aluminium oder Stahl oder Nickel bestehen. Hierdurch ist beispielhaft eine geeignete Kombination von zu verwendenden Materialien angegeben, die das Verfahren unterstützend aufgrund ihrer Festigkeiten und Wärmeleitfähigkeiten zum Einsatz gelangen können.

Anmeldungsgemäß ist weiter vorgesehen, daß der Querschnitt des Stutzens kreisrund oder beliebig ringförmig ist, der Stutzen eine Durchgangsöffnung hat und der in die Form ragende Abschnitt, mit einer demontierbaren hitzebeständigen Kappe verschlossen ist. Wenngleich die Stutzen als übliche Halbfabrikate mit kreisrundem Querschnitt ausgestattet sind, sicher auch die häufigste Verwendungsart darstellen, so ist erfindungsgemäß ein beliebiger Querschnitt möglich, z. B. Kombinationen von mehreren Stutzen, die dann vielleicht einer ovalen oder rechteckigen Querschnitt haben. Da es sich vorliegend um Stutzen zum Befüllen und Entleeren handelt, weisen die inneren Abschnitte der Stutzen eine Öffnung auf, die einfach mit einer demontierbaren hitzebeständigen Kappe gegen thermische Verformungen beim Rotationsformprozeß geschützt sind. Ein weiterer Vorteil der verwendbaren auf dem Markt befindlichen Halbfabrikate liegt darin, daß durch deren Einsatz, Stutzen mit definierten Innendurchmessern ohne Nachbearbeitung während des Rotationsformprozesses erzeugt werden können und sogar Wandstärkevariationen, obgleich prinzipiell das Rotationsformen nur definierte Außenmaße oder Außendurchmesser zuläßt.

Erfindungsgemäß ist ferner vorgesehen, daß die Scheibe separat mit Warmluft oder einer beliebigen Energiequelle während des Rotationsprozesses beheizbar ist. Die Scheibe kann also je nach sonstigen Randbedingungen elektrisch, induktiv etc. oder mit Warmluft beheizt werden. Letzteres ist anmeldungsgemäß besonders vorteilhaft, da dadurch keinerlei zusätzlicher technischer Aufwand zum Beheizen nötig ist.

Anmeldungsgemäß ist vorteilhaft vorgesehen, daß die Scheibe eine derart große Oberfläche hat, daß aufgrund der Warmluftbeaufschlagung der Form mit Prozeßwärme eine Verbindung des Materials des Stutzens mit dem der Form während des normalen Formprozesses erfolgt. Hierdurch kann mittels einer einfachen Berechnung eine Scheibenoberfläche gewählt werden, die der vorhandenen Prozesswärme die zur Verbindung nötige Wärmemenge entnimmt.

Die eingangs genannte Aufgabe wird hinsichtlich des Verfahrens zur Einbettung eines Stutzens in ein Kunststoffbehältnis im Rotationsformprozeß unter Verwendung der anmeldungsgemäßen Vorrichtung mit einer Haltevorrichtung auf einer Durchgangsöffnung einer Form mit einer Scheibe und einem Halter erfindungsgemäß dadurch gelöst, daß
- die Scheibe mit einem ihrer Flanschen einer Durchgangsöffnung mit einem Flansch der Durchgangsöffnung der Form verbunden wird,
- der hutförmige Halter mit zwei axialen Abschnitten unterschiedlicher Querschnitte mit einer ebenfalls hutförmigen Isolierung im Inneren eines Abschnittes größeren Querschnittes versehen wird,
- in die Isolierung der äußere Abschnitt des Stutzens form- und/oder kraftschlüssig eingefügt wird,
- ein zur Scheibe vorspringender Abschnitt der Isolierung in dem noch freien Flansch der Scheibe fest angeordnet wird,
- die innere Durchgangsöffnung des Stutzens mit einer Kappe kraftschlüssig verschlossen wird,
- die Form befüllt wird, und
- der Heizprozeß sowie Rotationsformprozeß eingeleitet und durchgeführt wird.

Überraschenderweise gestattet die anmeldungsgemäße Vorrichtung, ohne den Rotationsformprozeß modifizieren zu müssen, Kunststoffstutzen aus HDPE einzubetten, wobei lediglich die Form des Behältnisses mit einem Flansch zur Aufnahme einer Scheibe, die wiederum eine Haltevorrichtung mit einem Halter für einen Stutzen aufnimmt, ausgerüstet werden muß und der Flansch der Form entsprechend auszurichten ist. Besonders vorteilhaft entfallen jegliche zusätzlichen sonst nötigen Verbindungstechniken zur Verbindung zwischen Stutzen und der Wand, etwa Spiegelschweißen oder Warmgasschweißen, da eine schweißähnliche Verbindung vorteilhaft bereits während des Rotationsformprozesses entsteht. Weiter ist vorteilhaft, daß vorgefertigte Formteile mit exakten Innen- und Außenabmessungen dabei zum Einsatz gelangen und somit auch definierte Innendurchmesser ohne Nachbearbeitung und Wandstärkenvariationen möglich sind. Die gegenüber einem Rotationsformprozeß ohne Einbettung von Stutzen zusätzlichen erfindungsgemäßen Verfahrensschritte betreffen somit allein diejenigen, die mit der Vorbereitung des Stutzens für den Rotationsformprozeß erforderlich sind. Mit Ausnahme der Einbringung der Scheibe in die Form können diese sogar zeitlich und örtlich abseits von der Form bzw. dem Formprozeß vorbereitet werden.

Erfindungsgemäß ist ferner vorgesehen, daß die äußere Oberfläche der Form mit Warmluft beheizt wird und die Oberfläche der Scheibe gleichzeitig von der Warmluft erfaßt und beheizt wird. Hierdurch wird auf einfache Weise gewährleistet, daß keine zusätzliche Energie aufgewendet werden muß, um eine Verbindung des Stutzens mit dem Material des Behältnisses hervorzurufen. Es bedarf folglich auch keiner weiteren gerätetechnischen Aufrüstung, um eine gezielte Erwärmung im Bereich der zu erzeugenden Verbindungnaht zu gewährleisten.

Vorteilhaft ist ferner vorgesehen, daß die Scheibe unabhängig von der Prozesswärme für die Form separat beheizt wird. Sollte die Form nicht mit Warmluft beheizt werden, kann eine separate Heizung der Scheibe erforderlich sein. Die Scheibe könnte sodann induktiv oder mit Heizspiralen versehen beheizt werden. Selbstverständlich sind auch andere Heiztechniken möglich.

Vorteilhaft ist ferner vorgesehen, daß während des Rotationsformprozesses die Scheibe einen gezielten Wärmeenergiefluß in den Bereich der zu erzeugenden Verbindungsnaht bereitstellt und daß nach Abschluß des Formprozesses und des Entformens ein einstückiges, nicht nachzubearbeitendes Behältnis mit Stutzen entsteht. Hierdurch ist sichergestellt, daß der Stutzen im Bereich der zu erzeugenden Verbindungsnaht angeschmolzen wird, er im übrigen jedoch nur Temperaturen ausgesetzt ist, die seine Form nicht beeinträchtigen, obgleich es hierzu an sich keines besonderen Verfahrensschrittes bedarf.

Weitere bevorzugte Ausgestaltungen der Erfindung hinsichtlich dessen Erzeugnis, Vorrichtung und Verfahren ergeben sich aus den Unteransprüchen.

Ein Ausführungsbeispiel eines Erzeugnisses sowie einer Vorrichtung wird unter Bezugnahme auf eine Zeichnung nachfolgend näher erläutert. Darin zeigt:
Fig. 1 ein erfindungsgemäßes Kunststoffbehältnis schematisch im Schnitt, und
Fig. 2 einen schematischen Schnitt durch eine erfindungsgemäße Vorrichtung mit Behältnis und Stutzen.

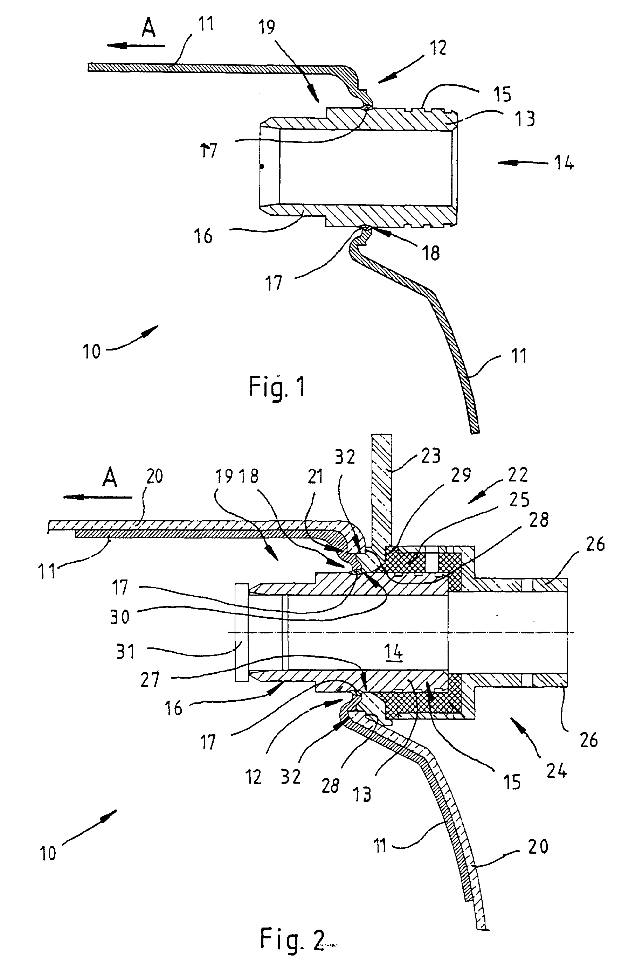

Fig. 1 zeigt ein erfindungsgemäßes Kunststoffbehältnis 10 schematisch im Schnitt, wobei die Wand 11 des Behältnisses 10 nur ausschnittsweise dargestellt ist. Das Kunststoffbehältnis 10 weist in Fig. 1 eine obere gerade Wand 11 auf, die gleichzeitig die Ausformrichtung gem. Pfeil A vorgibt. Ein in den Flanschabschnitt 12 des Behältnisses 10 eingebetteter Stutzen 13 ist mit seiner axialen Erstreckung parallel und in Abstand zu dem Abschnitt der Wand 11 eingebettet, der die Ausformrichtung gem. Pfeil A vorgibt. Der Stutzen 13 ist ein handelsübliches Halbfabrikat, i. d. R. bestehend aus High Dencity Polyethylen (HDPE). Das Kunststoffbehältnis 10 ist aus Linear Low Density Polyethylen (LLDPE) und im Rotationsformprozeß geformt. Selbstverständlich sind auch andere Kombinationen anderer Kunststoffe denkbar.

Der Stutzen 13 weist eine innere Durchgangsöffnung 14 und einen bezüglich der Wand 11 äußeren Abschnitt 15 sowie inneren Abschnitt 16 auf. Sämtliche Abmessungen des Stutzens 13 sind aufgrund des verwendeten Halbfabrikats definiert vorgegeben und werden durch den Rotationsformprozeß nicht negativ beeinflußt. D. h., insbesondere die Maße der Durchgangsöffnung 14 des Stutzens 13 sowie die Anschlußmaße, also die äußeren Abmessungen des äußeren Abschnittes 15 des Stutzens 13 sind definiert vorgebbar.

Aufgrund einer umlaufenden Verbindungsnaht 17 zwischen einer Durchgangsöffnung 18 des Flanschabschnittes 12 und der äußeren Mantelfläche 19 des Stutzens 13, die während des Rotationsformprozesses entsteht, ist eine dauerhafte Gas- und Flüssigkeitsdichte robuste Einbettung des Stutzens 13 in das Kunststoffbehältnis 10 gewährleistet. Die Verbindungsnaht 17 ist im Querschnitt linsenförmig und besteht aus einem Gemisch sowohl des Materials des Stutzens 13 als auch des Behältnisses 10. Die Verbindungsnaht 17 erstreckt sich in axialer Richtung des Stutzens 13 über die komplette Stärke der Wand 11 des Behältnisses 10. Der Flanschabschnitt 12 ist derart in das Behältnis 10 eingeformt, daß dessen nutzbare Querschnittsfläche orthogonal zur Längserstreckung des Stutzens 13 verläuft und im radialen Umfeld der Durchgangsöffnung 18 des Flanschabschnittes 12 ausreichend seitlicher Platz zur Verfügung steht, um Anschlußelemente auf dem Stutzen 13, die z. B. dem Befüllen und Entleeren dienen, anzuordnen.

Wenngleich in Fig. 1 die Abmessungen hinsichtlich des Stutzens 13 kreisrund sind, so ist es denkbar, daß der Flanschabschnitt 12 mehrere oder beliebige im Querschnitt ausgebildete ringförmige Stutzen aufnimmt.

Fig. 2 zeigt das Behältnis 10 mit Stutzen 13 in einer Form 20 des Rotationsformprozesses. Die Form 20 ist zur Ausbildung des Flanschabschnittes 12 entsprechend ausgeformt und weist eine Durchgangsöffnung 21 zur Aufnahme einer Vorrichtung 22 zur Einbettung des Stutzens 13 während des Rotationsformprozesses auf. Die Vorrichtung 22 besteht im wesentlichen aus einer Scheibe 23, einer Haltevorrichtung 24 und einer Isolierung 25 innerhalb eines Halters 26. Die Scheibe 23 weist eine Durchgangsöffnung 27 mit Flanschen 28 und 29 auf, von denen der Flansch 28 fest in die in einem Flansch 32 der Form 20 gebildete Durchgangsöffnung 21 greift und der Flansch 29 einen aus dem Halter 26 herausragenden Abschnitt der Isolierung 25 aufnimmt. Die Isolierung 25 ist hutförmig und umschließt lösbar den äußeren Abschnitt 15 des Stutzens 13.

Die Isolierung 25 ist ihrerseits innerhalb des Halters 26 angeordnet, der einen Abschnitt größeren Querschnittes zur Aufnahme der Isolierung hat und einen wieteren Abschnitt kleineren Querschnittes zu dessen Handhabung.

Als Materialien für die zusammenwirkenden Teile, also die Form 20 können Aluminium, Stahl oder Nickel, für den Halter 26 festes Material mit mittlerer Wärmeleitfähigkeit, für die Isolierung 25 festes Material mit geringster Wärmeleitfähigkeit und für die Scheibe 23 festes Material mit höchster Wärmeleitfähigkeit gewählt werden, wobei die Materialien mit geringster und höchster Leitfähigkeit zueinander in Bezug stehen. Hierdurch ist der äußere Abschnitt 15 des Stutzens 13 gegen die Prozeßwärmebeaufschlagung sicher geschützt und es ist ferner sichergestellt, daß ein ausreichender Wärmefluß in den Bereich der während des Formprozesses zu erzeugenden Verbindungsnaht 17 über die Scheibe 23 gewährleistet ist. Dies ist anmeldungsgemäß dadurch gelöst, daß die Scheibe 23 eine vorbestimmbare Oberflächengröße hat, die der notwendigen Energieaufnahme allein aus der Prozesswärme(warmluft) Rechnung trägt. Die Scheibe 23 führt sodann die aufgenomme Wärmeenergie bis an ihre Durchgangsöffnung 27. Diese Durchgangsöffnung 27 bildet zur äußeren Mantelfläche 19 des Stutzens 13 einen vorgebbaren Spalt 30, der maßgeblich Einfluß auf die zu erzeugende Verbindungsnaht 17 hat. Durch die an die Durchgangsöffnung 27 angrenzende Isolierung 25 ist die Verbindungsnaht 17 auf den Bereich der Wandstärke des Behältnisses 10 beschränkt, so daß ein sauberer, hochwertiger Übergang der Mantelfläche 19 des Stutzens 13 in den Flanschabschnitt 12 des Behältnisses 10 entsteht. Um einer Verunreinigung der Durchgangsöffnung 14 des Stutzens 13 und auch einer Verformung des inneren Abschnittes 16 des Stutzens 13 während des Formprozesses vorzubeuten, ist die innere Durchgangsöffnung 14 des Stutzens 13 mit einer Kappe 31 während des Formprozesses verschlossen. Die Kappe 31 wird nach Fertigstellung wieder entfernt. Wird eine andere Form als ein kreisrunder Querschnitt des Stutzens 13 verlangt, dann sind sämtliche diesbetreffende Abmessungen der Form 20 und Vorrichtung 22 entsprechend auszugestalten.

Ferner ist es selbstverständlich auch möglich, eine separate Energiequelle für die Scheibe 23, also den Verbindungsvorgang vorzusehen. Die Verbindung kann, abhängig von möglichen sonstigen Bedingungen, auch induktiv oder ohmsch erfolgen. Auch andere Heiztechniken sind selbstverständlich möglich.

Die in der vorstehenden Beschreibung in den Fig.1 und 2 sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Kunststoffbehältnis mit Stutzen, wobei der Stutzen in der Wand des Behältnisses in einer Durchgangsöffnung fest verankert ist und eine innere axiale Durchgangsöffnung aufweist, **dadurch gekennzeichnet, daß** der Stutzen (13) integraler Bestandteil des rotationsgeformten Behältnisses (10) ist, eine axiale Erstreckung mit einem bezüglich der Wand (11) des Behältnisses (10) äußeren und inneren Abschnitt (15, 16) und eine umlaufende Verbindungsnaht (17) die ringförmige Mantelfläche (19) des Stutzens (13) mit der Durchgangsöffnung (18) verbindet.

2. Behältnis nach Anspruch 1, **dadurch gekennzeichnet, daß** die Verbindungsnaht (17) in einem Spalt (30) zwischen dem Stutzen (13) und der Durchgangsöffnung (18) des Behältnisses (10) gebildet ist.

3. Behältnis nach Anspruch 2, **dadurch gekennzeichnet, daß** die Verbindungsnaht (17) im Querschnitt Linsenform hat und aus einem Gemisch des Materials des Behältnisses (10) und des Stutzens (13) besteht.

4. Behältnis nach Anspruch 3, **dadurch gekennzeichnet, daß** der Stutzen (13) aus High Density Polyethylen (HDPE) und das Behältnis (10) aus Linear Low Density Polyethylen (LLDPE) ist.

5. Behältnis nach einem oder mehreren der vorhergehenden Ansprüche, **dadurch gekennzeichnet, daß** die Längserstreckung des Stutzens (13) parallel zur Ausformrichtung und orthogonal zu einer ebenen Querschnittsfläche eines Flanschabschnittes (12) steht, der die Durchgangsöffnung (18) des Behältnisses (10) aufnimmt.

6. Behältnis nach Anspruch 5, **dadurch gekennzeichnet, daß** die Querschnitte des Stutzens (13) und der Durchgangsöffnung (18) einen ringförmigen Spalt (30) bildend aneinander angepaßt, kreisrund oder beliebig sind.

7. Behältnis nach Anspruch 6, **dadurch gekennzeichnet, daß** die Verbindungsnaht (17) den Stutzen (13) und das Behältnis (10) gas- und wasserdicht zu einem einzigen Teil miteinander verbindet.

8. Vorrichtung zur Einbettung eines Stutzens in ein Kunststoffbehältnis im Rotationsformprozeß, **dadurch gekennzeichnet, daß** eine Haltevorrichtung (24) den Stutzen (13) auf der äußeren Oberfläche der Form (20) des Behältnisses (10) in einer Durchgangsöffnung (21) der Form (20) positioniert, die Haltevorrichtung (24) einen Halter (26) umfaßt, der einen äußeren Abschnitt (16) des Stutzens (13) umschließt und fest in einer Durchgangsöffnung (27) einer ringförmigen Scheibe (23) angeordnet ist, die ihrerseits kraft- oder formschlüssig in der Durchgangsöffnung (21) der Form (20) angeordnet ist.

9. Vorrichtung nach Anspruch 8, **dadurch gekennzeichnet, daß** die Durchgangsöffnung (21) der Form (20) einen von außen zugänglichen Flansch (32) mit ebener Querschnittfläche hat.

10. Vorrichtung nach Anspruch 9, **dadurch gekennzeichnet, daß** die Scheibe (23) zum Eingriff in den Flansch (32) der Durchgangsöffnung (21) der Form (20) einen diesem angepaßten Flansch (28) aufweist und auf ihrer gegenüberliegenden Seite einen eingefrästen Flansch (29) zur Aufnahme des Halters (26) hat.

11. Vorrichtung nach Anspruch 10, **dadurch gekennzeichnet, daß** die äußeren Abmessungen des Stutzens (13) und die inneren Abmessungen der Durchgangsöffnung (27) der Scheibe (23) in der Ebene der äußeren Querschnittsfläche der Durchgangsöffnung (21) der Form (20) einen schmalen Spalt (30) bilden.

12. Vorrichtung nach Anspruch 11, **dadurch gekennzeichnet, daß** die inneren Abmessungen der Durchgangsöffnung (27) der Scheibe (13) zum Halter (26) hin zunächst konstant sind und sich dann linear vergrößern und in dem den Halter (26) aufnehmenden Flansch (29) der Scheibe auslaufen.

13. Vorrichtung nach Anspruch 12, **dadurch gekennzeichnet, daß** der Halter (26) hutförmig axial ausgebildet ist und einen inneren zur Scheibe (23) weisenden Abschnitt hat, der eine innere Isolierung (25) aufweist, die einen Abschnitt (15) des Stutzens (13) form- und/oder kraftschlüssig lösbar aufnimmt.

14. Vorrichtung nach Anspruch 13, **dadurch gekennzeichnet, daß** der Halter (26) axial in Abstand zur Scheibe (23) endet und die Isolierung (25) in diesem Abschnitt den Halter (26) ergänzt.

15. Vorrichtung nach Anspruch 14, **dadurch gekennzeichnet, daß** die Isolierung (25) aus einem festen Material mit geringer Wärmeleitfähigkeit, die Scheibe (23) aus festem Material mit hoher Wärmeleitfähigkeit und der Halter (26) aus festem Material mit mittleren Wärmeleitfähigkeit und die Form (20) aus Aluminium oder Stahl oder Nickel bestehen.

16. Vorrichtung nach Anspruch 15, **dadurch gekennzeichnet, daß** der Querschnitt des Stutzens (13) kreisrund oder beliebig ringförmig ist, der Stutzen (13) eine Durchgangsöffnung (14) hat und der in die Form (20) ragende Abschnitt (16) mit einer demontierbaren hitzebeständigen Kappe (31) verschlossen ist.

17. Vorrichtung nach Anspruch 16, **dadurch gekennzeichnet, daß** die Scheibe (23) separat mit Warmluft oder einer beliebigen Energiequelle während des Rotationsprozesses beheizbar ist.

18. Vorrichtung nach Anspruch 17, **dadurch gekennzeichnet, daß** die Scheibe (23) eine derart große Oberfläche hat, daß aufgrund der Warmluftbeaufschlagung der Form (20) mit Prozeßwärme eine Verbindung des Materials des Stutzens (13) mit dem der Form (20) während des normalen Formprozesses erfolgt.

19. Verfahren zur Einbettung eines Stutzens in ein Kunststoffbehältnis im Rotationsformprozeß mit einer Vorrichtung mit einer Haltevorrichtung auf einer Durchgangsöffnung einer Form mit einer Scheibe und einem Halter nach einem oder mehreren der vorangehenden Ansprüche, **dadurch gekennzeichnet, daß**
- die Scheibe (23) mit einem ihrer Flanschen (28, 29) einer Durchgangsöffnung (27) mit einem Flansch (32) der Durchgangsöffnung (21) der Form (20) verbunden wird,
- der hutförmige Halter (26) mit zwei axialen Abschnitten unterschiedlicher Querschnitte mit einer ebenfalls hutförmigen Isolierung (25) im Inneren eines Abschnittes größeren Querschnittes versehen wird,
- in die Isolierung (25) der äußere Abschnitt (15) des Stutzens (13) form- und/oder kraftschlüssig eingefügt wird,
- ein zur Scheibe (23) vorspringender Abschnitt der Isolierung (25) in dem noch freien Flansch (29) der Scheibe (23) fest angeordnet wird,
- die innere Durchgangsöffnung (14) des Stutzens (13) mit einer Kappe (31) kraftschlüssig verschlossen wird,
- die Form (20) befüllt wird, und
- der Heizprozeß sowie Rotationsformprozeß eingeleitet und durchgeführt wird.

20. Verfahren nach Anspruch 19, **dadurch gekennzeichnet, daß** die äußere Oberfläche der Form (20) mit Warmluft beheizt wird und die Oberfläche der Scheibe (23) gleichzeitig von der Warmluft erfaßt und beheizt wird.

21. Verfahren nach Anspruch 20, **dadurch gekennzeichnet, daß** die Scheibe (23) unabhängig von der Prozesswärme für die Form (20) separat beheizt wird.

22. Vorrichtung nach Anspruch 20, **dadurch gekennzeichnet, daß** während des Rotationsformprozesses die Scheibe (23) einen gezielten Wärmeenergiefluß in den Bereich der zu erzeugenden Verbindungsnaht (17) bereitstellt und daß nach Abschluß des Formprozesses und des Entformens ein einstückiges, nicht nachzubearbeitendes Behältnis (10) mit Stutzen (13) entsteht.
